# EUROPEAN PATENT APPLICATION

(11) **EP 4 550 734 A1**
(43) Date of publication of application: **07.05.2025**
(21) Application number: 22948316.9
(22) Date of filing: 28.06.2022
(51) Int. Cl.: H04L 27/00

(54) **METHOD AND APPARATUS FOR TRANSMITTING AUXILIARY INFORMATION, AND READABLE STORAGE MEDIUM**

(71) Applicant: Beijing Xiaomi Mobile Software Co., Ltd., Beijing 100085 (CN)
(72) Inventor: FU, Ting, Beijing 100085 (CN)
(74) Representative: Dehns Germany Partnerschaft mbB
(86) International application number: PCT/CN2022/102055
(87) International publication number: WO 2024/000196

(57) **Abstract**

Provided in the present disclosure are a method and apparatus for transmitting auxiliary information, and a readable storage medium The method comprises: sending auxiliary information to a network device, the auxiliary information comprising service feature information of uplink service data. In the method provided by the present disclosure, a user equipment reports service feature information of uplink service data to a network device, so that the network device can accurately learn the service feature information of the uplink service data. Therefore, the network device can perform more reasonable operations, such as receiving uplink service data at an appropriate moment or performing reasonable resource allocation, in combination with the service feature information of the uplink service data, thus facilitating reduction of energy consumption of the network device or the user equipment.

## Description

### TECHNICAL FIELD

The present disclosure relates to the field of wireless communication technology, and in particular to a method and a device for transmitting auxiliary information and a readable storage medium.

### BACKGROUND

In the fifth-generation (5G) wireless communication system, it is necessary to support the extended reality (XR) service type. XR includes augmented reality (AR), virtual reality (VR), cloud gaming, etc.

In an uplink XR service such as AR service, service data is generated at a fixed frame rate or a fixed period. Depending on the actual service conditions, there may be delay jitter (Jitter) or may not be delay jitter (Jitter) in the process of generating service data, and the data amount between different data frames may also fluctuate. On this basis, it is necessary for the network device to obtain relevant information about the uplink service data.

### SUMMARY

The present disclosure provides a method and a device for transmitting auxiliary information and a readable storage medium.

According to a first aspect, the present disclosure provides a method for sending auxiliary information, performed by a user equipment, including:
sending the auxiliary information to a network device, where the auxiliary information includes service characteristic information of uplink service data.

In the method of the present disclosure, the user equipment reports the service characteristic information of the uplink service data to the network device, so that the network device can accurately know the service characteristic information of the uplink service data. Thus, the network device can perform more reasonable operations in combination with the service characteristic information of the uplink service data, such as receiving the uplink service data at an appropriate timing, or performing reasonable resource configuration, which is conducive to saving the energy consumption of the network device or the user equipment.

In some embodiments, the uplink service data includes at least one service flow;
the auxiliary information includes the service characteristic information corresponding to the at least one service flow.

In some embodiments, the service characteristic information includes at least one of:
a frame rate of a service flow;
a service cycle of a service flow;
a start time offset of a service flow;
delay jitter information of a service flow; and
a data size of a data frame in a service flow.

In some embodiments, sending the auxiliary information to the network device includes:
in response to receiving request information sent by the network device, sending the auxiliary information to the network device, where the request information is configured to instruct the user equipment to report the service characteristic information.

According to a second aspect, the present disclosure provides a method for receiving auxiliary information, performed by a network device, including:
receiving auxiliary information sent by a user equipment, where the auxiliary information includes service characteristic information of uplink service data; and
determining a time domain position for receiving the uplink service data or to perform preset resource configuration according to the service characteristic information.

In the method of the present disclosure, the network device accurately obtains the service characteristic information of the uplink service data through the auxiliary information reported by the user equipment. Thus, the network device can perform more reasonable operations in combination with the service characteristic information of the uplink service data, such as receiving the uplink service data at an appropriate timing, or performing reasonable resource configuration, which is conducive to saving the energy consumption of the network device or the user equipment.

In some embodiments, determining the time domain position for receiving the uplink service data according to the service characteristic information includes:
in response to the user equipment sending the uplink service data via CG-PUSCH, determining a starting position of a data frame of the uplink service data according to the service characteristic information; and
monitoring the CG-PUSCH from the starting position to a monitoring end position within a cycle corresponding to the data frame.

In some embodiments, the method further includes:
not monitoring the CG-PUSCH between the monitoring end position within the cycle corresponding to the data frame and a starting position of a next data frame.

In some embodiments, the monitoring end position is an end position of a last CG-PUSCH carrying the uplink service data in the cycle corresponding to the data frame.

In some embodiments, the method further includes:
determining the monitoring end position by blind detection reception in the cycle corresponding to the data frame.

In some embodiments, the method further includes:
determining the monitoring end position according to a data size of the data frame, where the data size is a set value.

In some embodiments, the method further includes:
in response to the uplink service data including multiple service flows, determining the starting position and the monitoring end position of each service flow in the cycle corresponding to the data frame respectively according to the service characteristic information corresponding to each service flow.

In some embodiments, the method further includes:
sending first configuration information to the user equipment, where the first configuration information is configured to indicate one or more sets of CG-PUSCH resource configurations.

In some embodiments, determining the time domain position for receiving the uplink service data or to perform the preset resource configuration according to the service characteristic information includes:
determining a resource configuration of C-DRX according to the service characteristic information; and
sending second configuration information to the user equipment, where the second configuration information is configured to indicate the resource configuration of C-DRX.

In some embodiments, determining the resource configuration of C-DRX according to the service characteristic information includes:
configuring starting time of a working period in the C-DRX according to a starting time offset of the service characteristic information, and configuring a duration of the working period to include a generation period of the uplink service data.

According to a third aspect, the present disclosure provides a device for sending auxiliary information. The device can be configured to perform steps performed by the user equipment in the above first aspect or any possible solution of the above first aspect. The user equipment can implement various function of the above methods by a form of a hardware structure, a software module or a hardware structure plus a software module.

When implementing the device according to the third aspect by the software module, the device may include a transceiver module, where the transceiver module is configured to support the communication device to communicate.

When performing steps according to the first aspect, the transceiver module is configured to send auxiliary information to a network device, where the auxiliary information includes service characteristic information of uplink service data.

According to a fourth aspect, the present disclosure provides a device for receiving auxiliary information. The device can be configured to perform steps performed by the network device in the second aspect or any possible solution of the above second aspect. The network device can implement various function of the above methods by a form of a hardware structure, a software module or a hardware structure plus a software module.

When implementing the device according to the fourth aspect by the software module, the device may include a transceiver module and a processing module coupled to each other, where the transceiver module is configured to support the communication device to communicate.

When performing steps according to the second aspect, the transceiver module is configured to receive auxiliary information sent by a user equipment, where the auxiliary information includes service characteristic information of uplink service data. The processing module is configured to determine a time domain position of receiving the uplink service data or to perform preset resource configuration according to the service characteristic information.

According to a fifth aspect, the present disclosure provides a communication device, including a processor and a memory. The memory is configured to store a computer program; and the processor is configured to execute the computer program to implement the method according to the first aspect or any possible solution of the first aspect.

According to a sixth aspect, the present disclosure provides a communication device, including a processor and a memory. The memory is configured to store a computer program; and the processor is configured to execute the computer program to implement the method according to the second aspect or any possible solution of the second aspect.

According to a seventh aspect, the present disclosure provides a computer-readable storage medium, where the computer-readable storage medium stores instructions (or referred to as computer programs or programs), and when the instructions are called and executed on a computer, the computer executes the method according to the first aspect or any possible solution of the first aspect.

According to an eighth aspect, the present disclosure provides a computer-readable storage medium, where the computer-readable storage medium stores instructions (or referred to as computer programs or programs), and when the instructions are called and executed on a computer, the computer executes the method according to the second aspect or any possible solution of the second aspect.

It is to be understood that the foregoing general description and the following detailed description are exemplary and explanatory only and are not restrictive of the present disclosure.

### BRIEF DESCRIPTION OF THE DRAWINGS

The drawings described herein are used to provide a further understanding of the embodiments of the present disclosure and constitute a part of the present application. The schematic embodiments of the embodiments of the present disclosure and their descriptions are used to explain the embodiments of the present disclosure and do not constitute an improper limitation on the embodiments of the present disclosure. In the drawings:

The drawings herein are incorporated into the specification and constitute a part of the specification, showing embodiments that conform to the embodiments of the present disclosure and are used together with the specification to explain the principles of the embodiments of the present disclosure.
FIG. 1 is a schematic diagram of a wireless communication system architecture provided by an embodiment of the present disclosure;
FIG. 2 is a flowchart of a method for auxiliary information transmission according to an example embodiment;
FIG. 3 is a flowchart of another method for auxiliary information transmission according to an example embodiment;
FIG. 4 is a flowchart of another method for auxiliary information transmission according to an example embodiment;
FIG. 5 is a flowchart of a method for sending auxiliary information according to an example embodiment;
FIG. 6 is a flowchart of a method for receiving auxiliary information according to an example embodiment;
FIG. 7 is a flowchart of another method for receiving auxiliary information according to an example embodiment;
FIG. 8 is a schematic diagram of auxiliary information transmission according to an example embodiment;
FIG. 9 is a schematic diagram of auxiliary information transmission according to another example embodiment;
FIG. 10 is a schematic diagram of auxiliary information transmission according to another example embodiment;
FIG. 11 is a flowchart of another method for receiving auxiliary information according to an example embodiment;
FIG. 12 is a block diagram of a device for sending auxiliary information according to an example embodiment;
FIG. 13 is a block diagram of a user equipment according to an example embodiment;
FIG. 14 is a block diagram of a device for receiving auxiliary information according to an example embodiment;
FIG. 15 is a block diagram of a communication device according to an example embodiment.

### DETAILED DESCRIPTION

The embodiments of the present disclosure are now further described in conjunction with the drawings and specific embodiments.

The example embodiments will be described in detail here, and examples thereof are shown in the drawings. When the following description refers to the drawings, unless otherwise indicated, the same numbers in different drawings represent the same or similar elements. The embodiments described in the following example embodiments do not represent all embodiments consistent with the embodiments of the present disclosure. Instead, they are only examples of devices and methods consistent with some aspects of the present disclosure as detailed in the attached claims.

The terms used in the embodiments of the present disclosure are only for the purpose of describing specific embodiments and are not intended to limit the embodiments of the present disclosure. The singular forms "a", "an" and "the" used in the embodiments of the present disclosure and the attached claims are also intended to include plural forms unless the context clearly indicates other meanings. It should also be understood that the term "and/or" used herein refers to and includes any or all possible combinations of one or more associated listed items.

It should be understood that although the terms first, second, third, etc. may be used in the embodiments of the present disclosure to describe various information, such information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the words "if" and "assuming" as used herein may be interpreted as "upon..." or "when..." or "in response to determining".

The embodiments of the present disclosure are described in detail below, and examples of the embodiments are shown in the accompanying drawings. The same or similar reference numerals throughout represent the same or similar elements. The embodiments described below with reference to the accompanying drawings are examples and are intended to be used to explain the present disclosure, and cannot be understood as limiting the present disclosure.

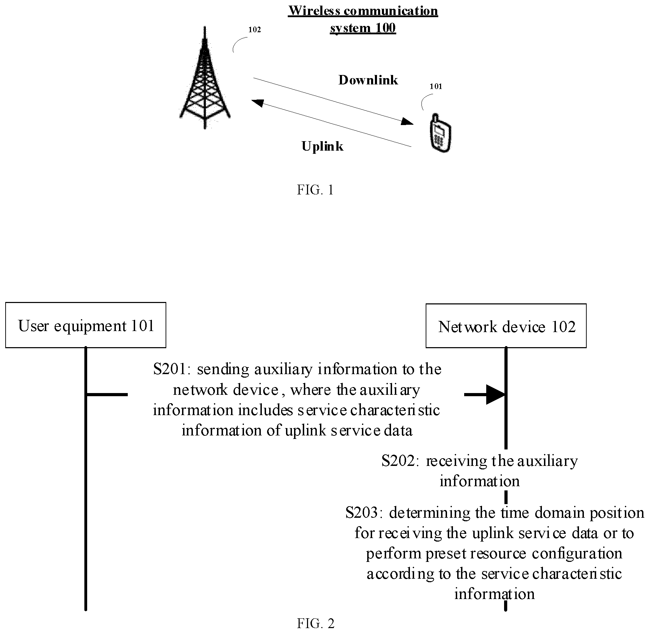

As shown in FIG. 1, a method for transmitting auxiliary information provided by an embodiment of the present disclosure may be applied to a wireless communication system 100. The wireless communication system 100 may include a user equipment 101 and a network device 102. The user equipment 101 is configured to support carrier aggregation and may be connected to multiple carrier units of the network device 102, including a main carrier unit and one or more auxiliary carrier units.

It should be understood that the above wireless communication system 100 may be applicable to both low-frequency scenarios and high-frequency scenarios. The application scenarios of the wireless communication system 100 include but are not limited to the long term evolution (LTE) system, the LTE frequency division duplex (FDD) system, the LTE time division duplex (TDD) system, the worldwide interoperability for micro wave access (WiMAX) communication system, the cloud radio access network (CRAN) system, the future fifth generation (5G) system, the new radio (NR) communication system or the future evolved public land mobile network (PLMN) system, etc.

The user equipment 101 shown above can be a terminal, an access terminal, a terminal unit, a terminal station, a mobile station (MS), a remote station, a remote terminal, a mobile terminal, a wireless communication device, a terminal agent or a terminal device, etc. The user equipment 101 can have a wireless transceiver function, which can communicate with one or more network devices of one or more communication systems (such as wireless communication) and receive network services provided by the network devices, where the network devices include but are not limited to the illustrated network device 102.

The user equipment (UE) 101 can be a cellular phone, a cordless phone, a session initiation protocol (SIP) phone, a wireless local loop (WLL) station, a personal digital assistant (PDA) device, a handheld device with wireless communication function, a computing device or other processing device connected to a wireless modem, a vehicle-mounted device, a wearable device, a terminal device in a future 5G network, or a terminal device in a future evolved PLMN network, etc.

The network device 102 can be an access network device (or access network point). The access network device refers to a device that provides network access function, such as a radio access network (RAN) base station, etc. The network device 102 can specifically include a base station (BS), or a base station and a wireless resource management device for controlling the base station, etc. The network device 102 can also include a relay station (relay device), an access point, a base station in a future 5G network, a base station in a future evolved PLMN network, or an NR base station, etc. The network device 102 can be a wearable device or a vehicle-mounted device. The network device 102 may also be a communication chip with a communication module.

For example, the network device 102 includes but is not limited to: the next generation base station (gnodeB, gNB) in 5G, the evolved node B (eNB) in the LTE system, the radio network controller (RNC), the node B (NB) in the WCDMA system, the wireless controller under the CRAN system, the base station controller (BSC), the base transceiver station (BTS) in the GSM system or CDMA system, the home base station (for example, home evolved nodeB, or home node B, HNB), the baseband unit (BBU), the transmission point (transmitting and receiving point, TRP), the transmitting point (TP) or the mobile switching center, etc.

Combined with the description of the following two scenarios, the necessity of the network device 102 to know the characteristics of the uplink service data is understood.

In order to save energy consumption of user equipment 101, a configured grant Physical Uplink Shared channel (CG-PUSCH) can be used to transmit uplink service data. Compared with the case of dynamic scheduling, when using CG-PUSCH to transmit uplink service data, user equipment 101 may not send a scheduling request (SR) and does not need to detect the downlink control information (DCI) of the scheduling PUSCH, so it can effectively save energy.

In the scenario of using CG-PUSCH to transmit uplink service data, in order to achieve fast transmission of uplink data, the cycle of CG-PUSCH is relatively dense, and most of the CG-PUSCH will be idle. The network device 102 does not know the characteristics of the uplink service data, so it needs to monitor or detect each CG-PUSCH, which leads to a waste of energy consumption of the network device 102.

The network device 102 can also configure the user equipment 101 with connected discontinuous reception (C-DRX). The user equipment 101 monitors the physical downlink control channel (PDCCH) during the active period of C-DRX to obtain uplink and downlink scheduling resources. During the inactive period, the user equipment 101 can be in a dormant state to save energy.

In the scenario of configuring C-DRX, there is a problem that the C-DRX configured by the network device 102 and the uplink service data cannot be well matched, which leads to an increase in transmission delay or waste of energy consumption of the user equipment 101. For example, when the user equipment 101 generates uplink service data, it is still in the inactive period of C-DRX. The user equipment 101 needs to process it in the following two methods: Method 1, wait for the start of the C-DRX working period (on duration) before obtaining uplink transmission resources; Method 2, initiate a scheduling request, and switch from the dormant state to the active state to transmit uplink service data. Method 1 will undoubtedly increase the transmission delay, and the state conversion process of Method 2 will waste the energy consumption of the user equipment.

Therefore, it is necessary for the network device 102 to know the characteristics of the uplink service data of the user equipment 101 to avoid increasing the transmission delay or wasting the energy consumption of the user equipment 101 or the network device 102.

The embodiment of the present disclosure provides a method for transmitting auxiliary information. Referring to FIG. 2, FIG. 2 is a method for auxiliary information transmission according to an example embodiment. As shown in FIG. 2, the method includes steps S201 to S202, specifically:
Step S201, the user equipment 101 sends auxiliary information to the network device 102, where the auxiliary information includes service characteristic information of uplink service data.
Step S202, the network device 102 receives the auxiliary information sent by the user equipment 101, where the auxiliary information includes the service characteristic information of the uplink service data.
Step S203, the network device 102 determines the time domain position for receiving the uplink service data or to perform preset resource configuration according to the service characteristic information.

In some possible implementations, the service characteristic information includes frame rate or service cycle of the uplink service data.

In one example, the uplink service data is uplink XR service data.

In one example, the frame rate of the uplink XR service data is 60 frames per second (FPS), and the service cycle is 16.77ms.

In some possible implementations, the service characteristic information includes the start time offset of the uplink service data.

In some possible implementations, the service characteristic information includes the delay jitter information of the uplink service data.

In one example, the delay jitter information is configured to indicate whether there is delay jitter in the uplink service data, or to indicate the range of the delay jitter.

In one example, when the service cycle is 16.77ms, the delay jitter can be in a range of [4, -4] ms.

In some possible implementations, the uplink service data includes at least one service flow, and each service flow has corresponding service characteristic information.

In some possible implementations, the network device 102 determines the time domain position for monitoring and receiving the uplink service data according to the service characteristic information, so as to save the energy consumption of the network device 102 while accurately receiving the data.

In some possible implementations, the preset resource configuration is, for example, the resource configuration of C-DRX, and the network device 102 performs more reasonable resource configuration according to the service characteristic information.

In the embodiment of the present disclosure, the network device 102 accurately obtains the service characteristic information of the uplink service data through the auxiliary information reported by the user equipment 101. This allows the network device 102 to perform more reasonable operations based on the service characteristic information of the uplink service data, such as receiving the uplink service data at an appropriate time, or performing reasonable resource allocation, which is conducive to saving energy consumption of the network device 102 or the user equipment 101.

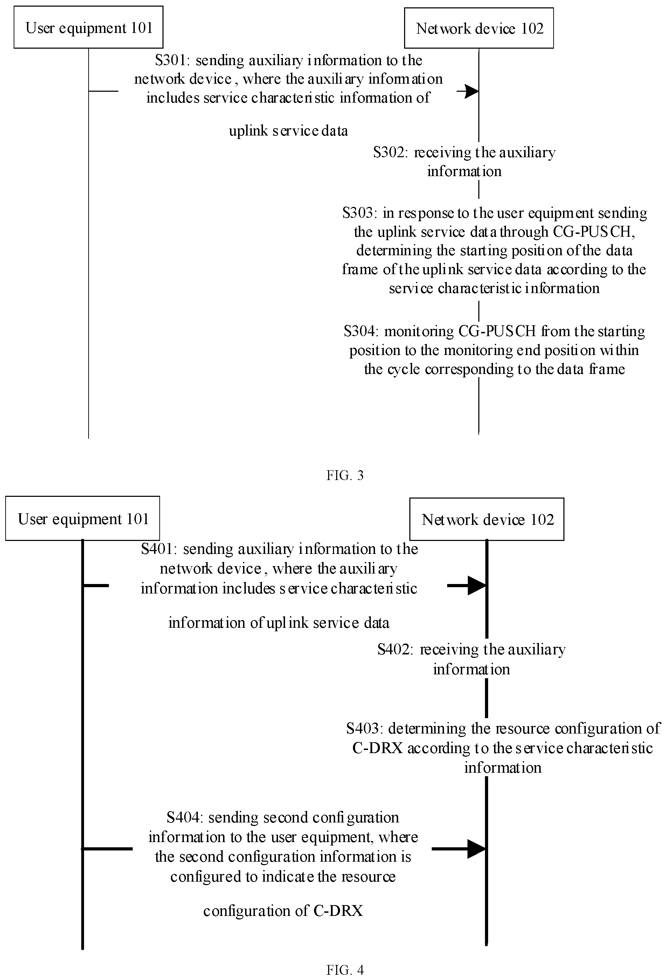

The present disclosure provides a method for auxiliary information transmission. Referring to FIG. 3, FIG. 3 is a method for auxiliary information transmission according to an example embodiment. As shown in FIG. 3, the method includes steps S301 to S304. Specifically:
Step S301: the user equipment 101 sends auxiliary information to the network device 102, where the auxiliary information includes service characteristic information of uplink service data.
Step S302: the network device 102 receives the auxiliary information sent by the user equipment 101, where the auxiliary information includes service characteristic information of uplink service data.
Step S303: in response to the user equipment 101 sending the uplink service data through CG-PUSCH, the network device 102 determines the starting position of the data frame of the uplink service data according to the service characteristic information.
Step S304: the network device 102 monitors CG-PUSCH from the starting position to the monitoring end position within the cycle corresponding to the data frame.

In some possible implementations, the service characteristic information includes the frame rate or the service cycle of the uplink service data.

In some possible implementations, the service characteristic information includes the starting time offset of the uplink service data.

In some possible implementations, the service characteristic information includes the delay jitter information of the uplink service data.

In some possible implementations, the service characteristic information includes the data size (frame size) of the data frame of the uplink service data.

In some possible implementations, the cycle of the CG-PUSCH is much smaller than the service cycle of the uplink service data.

In one example, the service cycle is 16.77ms.

In one example, the cycle of the CG-PUSCH is 1 slot.

In some possible implementations, the data frame in the uplink service data occupies part of the CG-PUSCH in the cycle corresponding to the data frame for transmission, and the remaining CG-PUSCH in the cycle corresponding to the data frame is vacant.

In some possible implementations, the monitoring end position corresponds to the end position of the CG-PUSCH containing the uplink service data.

In some possible implementations, the network device 102 can obtain the characteristics such as the start time offset, service cycle and delay jitter information of the uplink service data in combination with the service characteristic information, so as to determine the starting position of each data frame in the uplink service data. The network device 102 monitors the CG-PUSCH from the starting position to the monitoring end position.

In the embodiment of the present disclosure, the network device 102 accurately obtains the service characteristic information of the uplink service data through the auxiliary information reported by the user equipment 101. Therefore, the network device 102 can monitor the CG-PUSCH at an appropriate timing in combination with the service characteristic information of the uplink service data, without indiscriminately monitoring each CG-PUSCH, which is conducive to saving the energy consumption of the network device 102.

The embodiment of the present disclosure provides a method for auxiliary information transmission. Referring to FIG. 4, FIG. 4 is a method for auxiliary information transmission according to an example embodiment. As shown in FIG. 4, the method includes steps S401 to S404, specifically:
Step S401, the user equipment 101 sends auxiliary information to the network device 102, where the auxiliary information includes service characteristic information of the uplink service data.
Step S402, the network device 102 receives the auxiliary information sent by the user equipment 101, where the auxiliary information includes the service characteristic information of the uplink service data.
Step S403, the network device 102 determines the resource configuration of C-DRX according to the service characteristic information.
Step S404, the network device 102 sends second configuration information to the user equipment 101, where the second configuration information is configured to indicate the resource configuration of C-DRX.

In some possible implementations, the service characteristic information includes the frame rate or the service cycle of the uplink service data.

In some possible implementations, the service characteristic information includes the start time offset of the uplink service data.

In some possible implementations, the service characteristic information includes the delay jitter information of the uplink service data.

In some possible implementations, the service characteristic information includes the data size of the data frame of the uplink service data.

In some possible implementations, C-DRX includes a working period (on duration) and a sleep period (off duration), and the user equipment 101 can start PDCCH monitoring from the start time of the working period to the end time of the working period or the end time of the active period, without the need to continuously monitor PDCCH.

In some possible implementations, the resource configuration of C-DRX is configured to indicate the start time and duration of the working period in each C-DRX cycle.

In one example, the starting time of the working period is before the starting time offset of the uplink service data, and the generation and transmission period of each data frame of the uplink service data is included in the working period of the corresponding C-DRX cycle. In this example, the user equipment 101 generates and transmits the uplink service data to be transmitted in the working period of C-DRX. Therefore, the user equipment 101 does not need to increase the waiting time to ensure a lower transmission delay; the user equipment 101 does not need to initiate a state transition to save energy consumption.

In the embodiment of the present disclosure, the network device 102 accurately obtains the service characteristic information of the uplink service data through the auxiliary information reported by the user equipment 101. Therefore, the network device 102 can configure a more reasonable C-DRX resource configuration in combination with the service characteristic information of the uplink service data, so as to ensure a lower transmission delay or save the energy consumption of the user equipment 101.

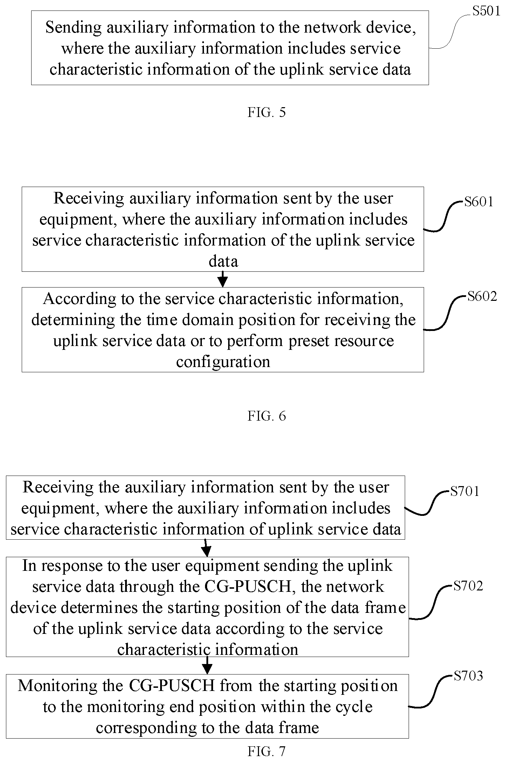

The embodiment of the present disclosure provides a method for sending auxiliary information, and the method of this embodiment is executed by the user equipment 101. Referring to FIG. 5, FIG. 5 is a method for sending auxiliary information according to an example embodiment. As shown in FIG. 5, the method includes step S501. Specifically:
Step S501, the user equipment 101 sends auxiliary information to the network device 102, where the auxiliary information includes service characteristic information of the uplink service data.

In some possible implementations, the service characteristic information includes the frame rate or the service cycle of the uplink service data.

In one example, the uplink service data is uplink XR service data.

In one example, the frame rate of the uplink XR service data is 60 frames per second (FPS), and the service cycle is 16.77ms.

In some possible implementations, the service characteristic information includes the data size of the data frame of the uplink service data.

In one example, the data size of each data frame of the uplink XR service data is different, the data amount of some data frames is small, and the data amount of some data frames is large.

In some possible implementations, the service characteristic information includes the start time offset of the uplink service data.

In some possible implementations, the service characteristic information includes the delay jitter information of the uplink service data.

In one example, the delay jitter information is configured to indicate whether there is delay jitter in uplink service data, or to indicate the range of delay jitter.

In one example, when the service cycle is 16.77ms, the delay jitter can be in a range of [4, -4] ms.

In some possible implementations, the user equipment 101 receives first configuration information sent by the network device 102, and the first configuration information is configured to indicate one or more sets of the resource configuration of CG-PUSCH. The user equipment 101 sends uplink service data via CG-PUSCH. The network device 102 monitors part of the CG-PUSCH in the corresponding period of each data frame according to the service characteristic information.

In some possible implementations, the user equipment 101 receives second configuration information sent by the network device 102, and the second configuration information is configured to indicate the resource configuration of C-DRX. The user equipment 101 sends uplink service data during the working period of C-DRX. The network device 102 determines the resource configuration of C-DRX according to the service characteristic information.

In the embodiment of the present disclosure, the user equipment 101 reports the service characteristic information of the uplink service data to the network device 102, so that the network device 102 can accurately know the service characteristic information of the uplink service data. Thus, the network device 102 can perform more reasonable operations in combination with the service characteristic information of the uplink service data, such as receiving the uplink service data at an appropriate timing, or performing reasonable resource configuration, which is conducive to saving the energy consumption of the network device 102 or the user equipment 101.

The embodiment of the present disclosure provides a method for sending auxiliary information, and the method of this embodiment is executed by the user equipment 101. The method includes step S501, specifically:
Step S501, the user equipment 101 sends auxiliary information to the network device 102, where the auxiliary information includes service characteristic information of uplink service data.

The uplink service data includes at least one service flow.

The auxiliary information includes the service characteristic information corresponding to the at least one service flow.

In some possible implementations, the uplink service data of the user equipment 101 includes multiple uplink service flows.

In some possible implementations, in a scenario of multiple uplink service flows, each service flow has service characteristic information corresponding to the service flow. The service characteristic information corresponding to different service flows is independent, and the user equipment 101 reports the service characteristic information corresponding to each service flow independently.

In one example, the uplink service data includes a first XR service flow and a second XR service flow.

In one example, the auxiliary information includes first service characteristic information corresponding to the first XR service flow and second service characteristic information corresponding to the second XR service flow. The user equipment 101 reports the first service characteristic information and the second service characteristic information by sending the auxiliary information.

In some possible implementations, when the user equipment 101 uses CG-PUSCH to transmit uplink service data, the network device 102 monitors the CG-PUSCH corresponding to each service flow respectively according to the service characteristic information of different service flows.

In some possible implementations, after the user equipment 101 reports the service characteristic information of different service flows, the network device 102 configures C-DRX according to the service characteristic information of different service flows, so that the data frame corresponding to each service flow is generated or transmitted during the working period.

In the embodiment of the present disclosure, the user equipment 101 reports the service characteristic information of different service flows, so that the network device 102 can accurately know the service characteristic information corresponding to each service flow, receive the uplink service data of different service flows at appropriate timings, or reasonably configure resources for different service flows.

The embodiment of the present disclosure provides a method for sending auxiliary information, and the method of this embodiment is executed by the user equipment 101. The method includes step S501, specifically:
Step S501, the user equipment 101 sends auxiliary information to the network device 102, where the auxiliary information includes service characteristic information of uplink service data.

The service characteristic information includes at least one of the following:
a frame rate of a service flow;
a service cycle of the service flow;
a start time offset of the service flow;
delay jitter information of the service flow; and
data amount of a data frame in the service flow.

In some possible implementations, the delay jitter information is configured to indicate whether there is delay jitter in the uplink service data.

In one example, there is no delay jitter in the uplink service data. For example, the frame rate of the uplink service data is 60 frames/second, and the service cycle is 16.77ms. The nth data frame is generated at t1, and the (n+1)th data frame is generated at (T1+16.77 ms). When n=1, t1 corresponds to the start time offset.

In one example, there is delay jitter in the uplink service data, and the time domain position when generating the (n+1)th data frame is related to the service cycle and the delay jitter.

In some possible implementations, the delay jitter information is configured to indicate a range of the delay jitter of the uplink service data.

In one example, the frame rate of the uplink service data is 60 frames/second, the service cycle is 16.77ms, and the delay jitter is in a range of [4, -4] ms.

In some possible implementations, the delay jitter information is configured to indicate the probability distribution information of the delay jitter.

In one example, the delay jitter information is configured to indicate that the delay jitter conforms to the Gaussian distribution.

In some possible implementations, the data size is a set value.

In one example, the set value is configured to characterize the set bit value.

In some possible implementations, the data size is not fixed, and the data size is configured to indicate the statistical characteristics of the data volume.

In one example, the data size is configured to indicate the average value of the data sizes of respective data frames.

In one example, the data volume size is configured to indicate the maximum value of the data sizes of respective data frames.

In one example, the data volume size is configured to indicate the minimum value of the data sizes of respective data frames.

In one example, the data size is configured to indicate the variance of the data sizes of respective data frames.

In some possible implementations, the uplink service data includes at least one service flow.

The auxiliary information includes service characteristic information corresponding to at least one service flow.

In one example, the uplink service data includes multiple XR service flows, and the service characteristic information of each service flow includes at least one of the frame rate, the service cycle, the start time offset, the delay jitter information of the service flow and the data size.

In the embodiment of the present disclosure, the user equipment 101 can report multiple service characteristic information so that the network device 102 can perform corresponding processing more accurately.

The embodiment of the present disclosure provides a method for sending auxiliary information, and the method of the embodiment is executed by the user equipment 101. The method includes step S501', specifically:
Step S501', in response to receiving request information sent by the network device 102, sending auxiliary information to the network device 102, where the request information is configured to instruct the user equipment 101 to report the service characteristic information.

In the embodiment of the present disclosure, the user equipment 101 can report auxiliary information to the network device 102 after receiving the request information.

The embodiment of the present disclosure provides a method for receiving auxiliary information, and the method of the embodiment is executed by the network device 102. Referring to FIG. 6, FIG. 6 is a method for receiving auxiliary information according to an example embodiment. As shown in FIG. 6, the method includes steps S601~602, specifically:
Step S601, the network device 102 receives auxiliary information sent by the user equipment 101, where the auxiliary information includes service characteristic information of the uplink service data.
Step S602, according to the service characteristic information, the network device 102 determines the time domain position for receiving the uplink service data or performs preset resource configuration.

In some possible implementations, the uplink service data includes at least one service flow.

The auxiliary information includes service characteristic information corresponding to at least one service flow.

In some possible implementations, the service characteristic information includes at least one of the following:
a frame rate of the service flow;
a service cycle of the service flow;
a start time offset of the service flow;
delay jitter information of the service flow; and
a data size of a data frame in the service flow.

In one example, the data size is a set value. In this example, when the data size of the data frame is a set value, it indicates that the data size of each data frame in the service flow is fixed, and the data size of each data frame is the same, which is the set value, and the set value may be a corresponding set bit value.

In one example, the data size of each data frame is not fixed or different. The data size may be configured to indicate at least one of the average value, the maximum value, the minimum value and variance of the data sizes of respective data frames.

In some possible implementations, in the scenario where CG-PUSCH is used for uplink service data transmission, the network device 102 may determine the time domain position of receiving uplink service data according to the service characteristic information.

In some possible implementations, in the scenario where the network device 102 configures C-DRX, the network device 102 may perform resource configuration of C-DRX according to the service characteristic information, that is, the preset resource configuration corresponds to the resource configuration of C-DRX.

In the embodiment of the present disclosure, the network device 102 accurately obtains the service characteristic information of the uplink service data through the auxiliary information reported by the user equipment 101. Thus, the network device 102 can perform more reasonable operations in combination with the service characteristic information of the uplink service data, such as receiving the uplink service data at an appropriate timing, or performing reasonable resource configuration, which is conducive to saving the energy consumption of the network device 102 or the user equipment 101.

The embodiment of the present disclosure provides a method for receiving auxiliary information, and the method of this embodiment is executed by the network device 102. Referring to FIG. 7, FIG. 7 is a method for receiving auxiliary information according to an example embodiment. As shown in FIG. 7, the method includes steps S701 to S703, specifically:
Step S701, the network device 102 receives the auxiliary information sent by the user equipment 101, where the auxiliary information includes service characteristic information of uplink service data.
Step S702, in response to the user equipment 101 sending the uplink service data through the CG-PUSCH, the network device 102 determines the starting position of the data frame of the uplink service data according to the service characteristic information.
Step S703, the network device 102 monitors the CG-PUSCH from the starting position to the monitoring end position within the cycle corresponding to the data frame.

In some possible implementations, the service characteristic information includes at least one of the following:
a frame rate of a service flow;
a service cycle of a service flow;
start time offset of a service flow;
delay jitter information of a service flow; and
a data size of a data frame in a service flow.

In some possible implementations, based on the service characteristic information of the uplink service data, the network device 102 can know a starting position of each data frame in the uplink service data.

In some possible implementations, in the scenario where the data size is not fixed, that is, the data size is not a set value, the network device 102 can detect the monitoring end position by blind detection reception.

In one example, the data size of each data frame of the uplink service data is different, and the network device 102 detects the monitoring end position of each data frame respectively.

In some possible implementations, in the scenario where the data size is a set value, that is, the data size of each data frame is the same and is a set value, the network device 102 can determine the monitoring end position in combination with modulation and coding scheme (MCS).

In the embodiment of the present disclosure, the network device 102 monitors the CG-PUSCH at a suitable position according to the service characteristic information of the uplink service data, so as to obtain the uplink service data in a timely and effective manner.

The embodiment of the present disclosure provides a method for receiving auxiliary information, and the method of this embodiment is executed by the network device 102. The method includes steps S701 to S704, specifically:
Step S701, the network device 102 receives the auxiliary information sent by the user equipment 101, where the auxiliary information includes service characteristic information of uplink service data.
Step S702, in response to the user equipment 101 sending the uplink service data through the CG-PUSCH, the network device 102 determines a starting position of a data frame of the uplink service data according to the service characteristic information.
Step S703, the network device 102 monitors the CG-PUSCH from the starting position to the monitoring end position within a cycle corresponding to the data frame.
Step S704, the network device 102 does not monitor the CG-PUSCH between the monitoring end position within the cycle corresponding to the data frame and a starting position of a next data frame.

In the embodiment of the present disclosure, in a cycle corresponding to each data frame, the network device 102 only monitors the CG-PUSCH from the start position to the monitoring end position in the cycle, and does not need to monitor the CG-PUSCH between the monitoring end position and the start position of the next data frame, thereby effectively saving the energy consumption of the network device 102.

The embodiment of the present disclosure provides a method for receiving auxiliary information, and the method of this embodiment is executed by the network device 102. The method includes steps S701~S703, or includes steps S701~S704.

The monitoring end position is the end position of the last CG-PUSCH carrying uplink service data in the cycle corresponding to the data frame.

In some possible implementations, in the cycle corresponding to the data frame, the monitoring end position is determined by blind detection reception.

In one example, in the data frame generation cycle, the network device 102 can monitor and determine the kth CG-PUSCH that does not carry uplink service data by blind detection reception. The network device 102 does not need to monitor the CG-PUSCH between the kth CG-PUSCH and the start position of the next data frame to save power consumption.

In one example, starting from the starting position, the network device 102 determines whether the CG-PUSCH carries uplink service data by detecting the demodulation reference signal (DMRS) in the CG-PUSCH in the corresponding cycle of the data frame. If the uplink service data is not carried, it is determined that the CG-PUSCH is not monitored from the CG-PUSCH that does not carry the uplink service data to the starting position of the next data frame.

In the embodiment of the present disclosure, the network device 102 can determine whether it is necessary to monitor the CG-PUSCH by blind detection reception, thereby effectively saving the energy consumption of the network device 102 on the basis of effectively obtaining uplink service data.

The embodiment of the present disclosure provides a method for receiving auxiliary information, and the method of the present embodiment is executed by the network device 102. The method includes steps S701~S703, specifically:
Step S701, the network device 102 receives the auxiliary information sent by the user equipment 101, where the auxiliary information includes service characteristic information of uplink service data.
Step S702-1, in response to the user equipment 101 sending the uplink service data through CG-PUSCH, the network device 102 determines a starting position of a data frame of the uplink service data according to the service characteristic information.
Step S702-2, determining a monitoring end position according to a data size of the data frame, where the data size is a set value.
Step S703, the network device 102 monitors CG-PUSCH from the starting position to the monitoring end position within a cycle corresponding to the data frame.

Alternatively, the method includes steps S701 to S704, specifically:
Step S701, the network device 102 receives auxiliary information sent by the user equipment 101, where the auxiliary information includes service characteristic information of uplink service data.
Step S702-1, in response to the user equipment 101 sending the uplink service data through CG-PUSCH, the network device 102 determines a starting position of a data frame of the uplink service data according to the service characteristic information.
Step S702-2, the network device 102 determine a monitoring end position according to a data size of the data frame, where the data size is a set value.
Step S703, the network device 102 monitors the CG-PUSCH from the starting position to the monitoring end position within a cycle corresponding to the data frame.
Step S704, the network device 102 does not monitor the CG-PUSCH between the monitoring end position within the cycle corresponding to the data frame and a starting position of a next data frame.

In some possible implementations, the network device 102 determines the amount of data carried by each CG-PUSCH and the number of CG-PUSCHs carrying data in the corresponding cycle of each data frame in combination with the value of MCS and the set value of the data frame, thereby determining the monitoring end position.

In one example, the value of MCS is configured by a high layer.

In the embodiment of the present disclosure, in the scenario where the data size of the data frame is a set value, the network device 102 can predetermine the monitoring end position, thereby monitoring the CG-PUSCH between the starting position and the monitoring end position.

The embodiment of the present disclosure provides a method for receiving auxiliary information, and the method of the present embodiment is executed by the network device 102. The method includes steps S701 to S703, or includes steps S701 to S704, and the method further includes:
Step S701', in response to the uplink service data including multiple service flows, according to the service characteristic information corresponding to each service flow, respectively determine the starting position and monitoring end position of each service flow in the corresponding cycle of the data frame.

In some possible implementations, in a scenario where the uplink service data includes multiple service flows, the starting position and the monitoring end position of each service flow can be determined respectively in the cycle corresponding to the data frame.

In some possible implementations, in the cycle corresponding to the data frame, the network device 102 monitors the CG-PUSCH between the starting position and the monitoring end position corresponding to each service flow respectively.

In one example, the uplink service data includes a first XR service flow and a second XR service flow, and the auxiliary information includes the first service characteristic information and the second service characteristic information corresponding to the second XR service flow.

In this example, the network device 102 determines the starting position of the first XR service flow in the cycle corresponding to the data frame according to the starting time offset, the service cycle and the delay jitter information in the first service characteristic information. The network device 102 determines the starting position of the second XR service flow in the cycle corresponding to the data frame according to the starting time offset, the service cycle and the delay jitter information in the second service characteristic information.

In this example, in the cycle corresponding to the data frame, the network device 102 monitors the CG-PUSCH from the starting position of the corresponding service flow until the CG-PUSCH with no service data is blindly detected, that is, until the monitoring end position. There is no need to monitor the CG-PUSCH between the CG-PUSCH without service data and the next data frame.

In the embodiment of the present disclosure, in the scenario where the uplink service data includes multiple service flows, the network device 102 can monitor and obtain the data of multiple service flows respectively in combination with the service characteristic information, and receive the data accurately and timely on the basis of saving the energy consumption of the network device.

To facilitate the understanding of this embodiment, the following examples are listed here for illustration.

### Example 1:

The network device 102 learns that the uplink service data includes a service flow in combination with the auxiliary information reported by the user equipment 101, and the service characteristic information of the service flow indicates: the service cycle is 16.67ms, there is no delay jitter, and the data size is not fixed (not a set value).

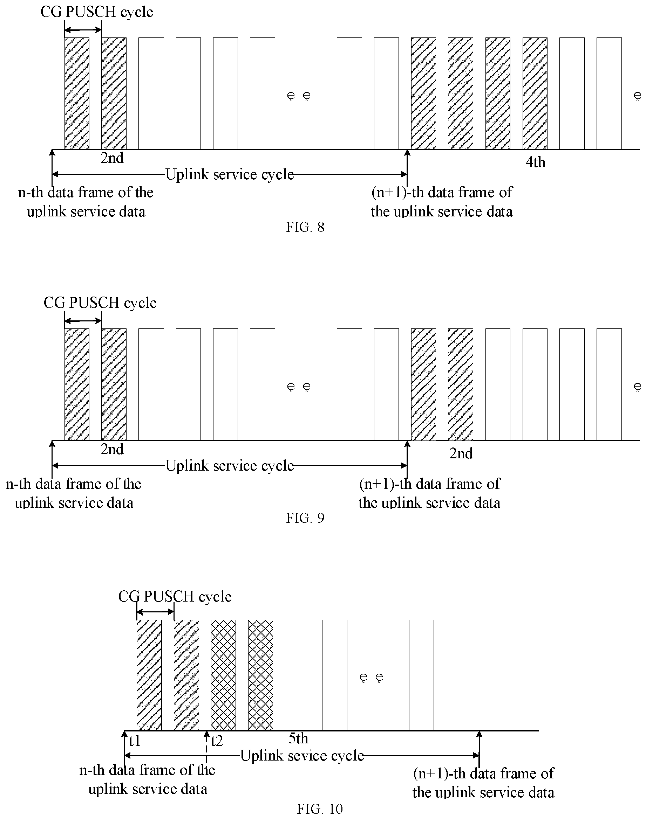

In this example, combined with FIG. 8, the network device 102 monitors the CG-PUSCH from the starting position of the data frame in the cycle corresponding to the nth data frame until the kth CG-PUSCH that does not carry uplink service data is detected. The network device 102 does not need to monitor the CG-PUSCH from the kth CG-PUSCH to the starting position of the (n+1)th data frame. In the cycle of the nth data frame, k=3, and the monitoring end position is the end position of the second CG-PUSCH.

In the cycle corresponding to the (n+1)th data frame, the CG-PUSCH is monitored from the starting position of the data frame until the kth CG-PUSCH that does not carry uplink service data is detected. The network device 102 does not need to monitor the CG-PUSCH from the kth CG-PUSCH to the starting position of the (n+2)th data frame. In the cycle of the (n+1)th data frame, k=5, and the monitoring end position is the end position of the fourth CG-PUSCH.

### Example 2:

The network device 102, in combination with the auxiliary information reported by the user equipment 101, learns that the uplink service data includes a service flow, and the service characteristic information of the service flow indicates: the service cycle is 16.67ms, there is no delay jitter, and the data size of each data frame is a set value, that is, the data size of each data frame is the same and fixed. The set value can be a set bit value.

In this example, combined with the value of MCS and the set value of the data frame as shown in FIG. 9, the network device 102 determines that the last CG-PUSCH carrying data in the corresponding cycle of each data frame is the second CG-PUSCH, and the monitoring end position is the end position of the second CG-PUSCH.

In the cycle corresponding to the nth data frame, the CG-PUSCH is monitored from the starting position of the data frame until the monitoring of the second CG-PUSCH ends. From the 3rd CG-PUSCH to the starting position of the (n+1)th data frame, the network device 102 does not need to monitor the CG-PUSCH.

### Example 3:

The network device 102, in combination with the auxiliary information reported by user equipment 101, learns that the uplink service data includes a first service flow and a second service flow.

The service characteristic information of the first service flow indicates: the service cycle is 16.67ms, there is no delay jitter, the starting time offset is t1, and the data size is not fixed (not a set value);

The service characteristic information of the second service flow indicates: the service cycle is 16.67ms, there is no delay jitter, the starting time offset is t2, and the data size is not fixed (not a set value).

In this example, combined with FIG. 10, the network device 102 starts to monitor the CG-PUSCH from t1 in the cycle corresponding to the first data frame to obtain the uplink service data of the first service flow until the third CG-PUSCH without data is detected. The network device 102 starts to monitor the CG-PUSCH from t2 (t2 is earlier than the starting position of the third CG-PUSCH) to obtain the uplink service data of the second service flow until the fifth CG-PUSCH without data is detected, and the monitoring end position is the end position of the fourth CG-PUSCH. In this cycle, the network device 102 does not need to monitor the CG-PUSCH between the 5th CG-PUSCH and the starting position of the second data frame.

It can be understood that the relationship between the start time offset between the first service flow and the second service flow in this example is only for illustration and not for limitation. In other examples, the start time offset between different service flows may be separated by one or more CG-PUSCHs. The network device 102 respectively determines the time domain positions of monitoring according to the service characteristic information of different service flows, and monitors the CG-PUSCH at the corresponding time domain positions to obtain the service data corresponding to the service flow.

The embodiment of the present disclosure provides a method for receiving auxiliary information, and the method of this embodiment is executed by the network device 102. The method includes step S700, specifically:
Step S700, the network device 102 sends first configuration information to the user equipment 101, where the first configuration information is configured to indicate one or more sets of the resource configuration of CG-PUSCH.

In the embodiment of the present disclosure, according to the first configuration information, the user equipment 101 can use CG-PUSCH to transmit uplink service data, so that there is no need to send SR or detect DCI, which can effectively save the energy consumption of the user equipment 101.

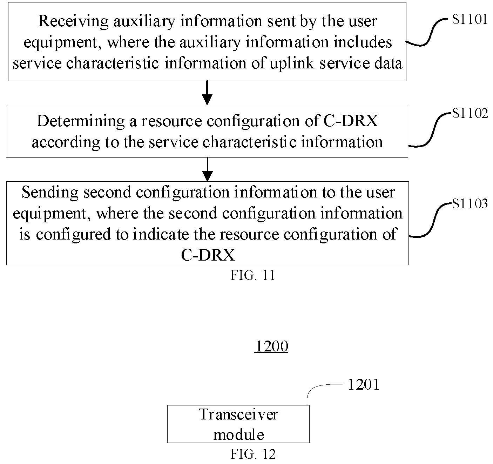

The embodiment of the present disclosure provides a method for receiving auxiliary information, and the method of this embodiment is executed by the network device 102. Referring to FIG. 11, FIG. 11 is a method for receiving auxiliary information according to an example embodiment. As shown in FIG. 11, the method includes steps S1101~S1103, specifically:
Step S1101, the network device 102 receives auxiliary information sent by the user equipment 101, where the auxiliary information includes service characteristic information of uplink service data.
Step S1102, determining a resource configuration of C-DRX according to the service characteristic information,
Step S1103, sending second configuration information to the user equipment, where the second configuration information is configured to indicate the resource configuration of C-DRX.

In some possible implementations, the network device 102 determines a reasonable C-DRX working period according to the service characteristic information.

In some possible implementations, the network device 102 configures the starting time of the working period in C-DRX according to the starting time offset of the service characteristic information, and configures the duration of the working period to include the generation period of uplink service data.

In one example, the network device 102 learns the starting time offset of the uplink service data according to the service characteristic information, and the network device 102 configures the starting time of the working period of the corresponding cycle before the starting time offset, and configures the generation and transmission period of the data frame to be included in the working period.

In the embodiment of the present disclosure, the network device 102 reasonably configures C-DRX according to the service characteristic information of the uplink service data, so that the user equipment 101 does not need to wait for the working period when generating the uplink service data to be transmitted, so as to avoid increasing the waiting time and transmission delay; and when generating the uplink service data to be transmitted, the user equipment 101 does not need to initiate a state transition, so as to effectively save energy consumption.

Based on the same concept as the above method embodiment, the embodiment of the present disclosure also provides a device for receiving configuration information, which can have the function of the user equipment 101 in the above method embodiment, and can be configured to execute the steps performed by the user equipment 101 provided in the above method embodiment. The function can be implemented by hardware, or by software or by hardware executing corresponding software. The hardware or software includes one or more modules corresponding to the above functions.

In one possible implementation, the device 1200 shown in FIG. 12 can be used as the user equipment 101 involved in the above method embodiment, and execute the steps performed by the user equipment 101 in the above method embodiment. As shown in FIG. 12, the device 1200 may include mutually coupled transceiver modules 1201. The transceiver module 1201 can be configured to support the communication device to communicate, and the transceiver module 1201 may have a wireless communication function, for example, it can communicate wirelessly with other communication devices through a wireless air interface.

When executing the steps implemented by the user equipment 101, the transceiver module 1201 is configured to send auxiliary information to the network device 102, and the auxiliary information includes service characteristic information of uplink service data.

In some possible implementations, the uplink service data includes at least one service flow;
The auxiliary information includes service characteristic information corresponding to at least one service flow.

In some possible implementations, the service characteristic information includes at least one of the following:
a frame rate of the service flow;
a service cycle of the service flow;
a start time offset of the service flow;
delay jitter information of the service flow; and
a data size of a data frame in the service flow.

In some possible implementations, the transceiver module 1201 is further configured to send auxiliary information to the network device in response to receiving request information sent by the network device, where the request information is configured to instruct the user equipment to report service characteristic information.

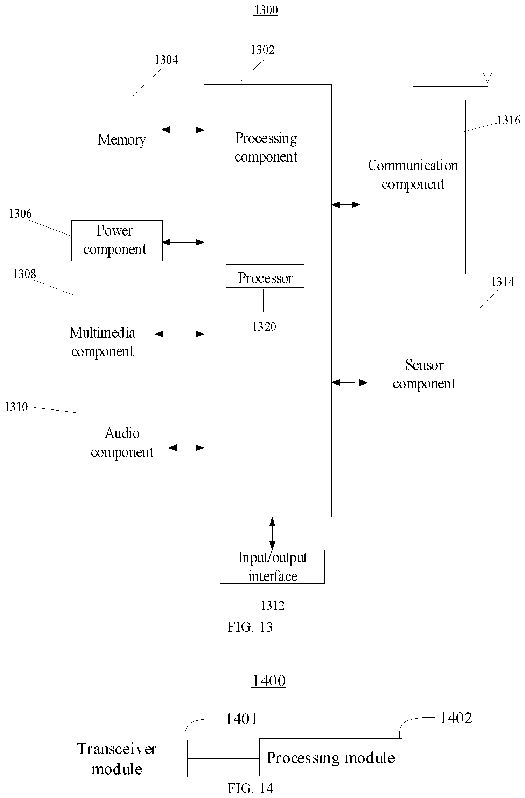

When the device for receiving configuration information is the user equipment 101, its structure may also be as shown in FIG. 13. The device 1300 may be a mobile phone, a computer, a digital broadcast terminal, a message transceiver device, a game console, a tablet device, a medical device, a fitness device, a personal digital assistant, etc.

Referring to FIG. 13, the device 1300 may include one or more of the following components: a processing component 1302, a memory 1304, a power component 1306, a multimedia component 1308, an audio component 1310, an input/output (I/O) interface 1312, a sensor component 1314, and a communication component 1316.

The processing component 1302 generally controls the overall operation of the device 1300, such as operations associated with display, phone calls, data communications, camera operations, and recording operations. The processing component 1302 may include one or more processors 1320 to execute instructions to complete all or part of the steps of the above method. In addition, the processing component 1302 may include one or more modules to facilitate the interaction between the processing component 1302 and other components. For example, the processing component 1302 may include a multimedia module to facilitate the interaction between the multimedia component 1308 and the processing component 1302.

The memory 1304 is configured to store various types of data to support the operation of the device 1300. Examples of such data include instructions for any application or method operating on the device 1300, contact data, phone book data, messages, pictures, videos, etc. The memory 1304 can be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

The power component 1306 provides power to various components of the device 1300. The power component 1306 may include a power management system, one or more power supplies, and other components associated with generating, managing, and distributing power for the device 1300.

The multimedia component 1308 includes a screen that provides an output interface between the device 1300 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, slide, and gestures on the touch panel. The touch sensor may not only sense the boundaries of the touch or slide action, but also detect the duration and pressure associated with the touch or slide operation. In some embodiments, the multimedia component 1308 includes a front camera and/or a rear camera. When the device 1300 is in an operating mode, such as a shooting mode or a video mode, the front camera and/or the rear camera may receive external multimedia data. Each of the front camera and the rear camera may be a fixed optical lens system or have focal length and optical zoom capabilities.

The audio component 1310 is configured to output and/or input audio signals. For example, the audio component 1310 includes a microphone (MIC), which is configured to receive external audio signals when the device 1000 is in an operating mode, such as a call mode, a recording mode, and a voice recognition mode. The received audio signal can be further stored in the memory 1304 or sent via the communication component 1316. In some embodiments, the audio component 1310 also includes a speaker for outputting audio signals.

The I/O interface 1312 provides an interface between the processing component 1302 and the peripheral interface module, which can be a keyboard, a click wheel, a button, etc. These buttons may include, but are not limited to: a home button, a volume button, a start button, and a lock button.

The sensor component 1314 includes one or more sensors for providing various aspects of status assessment for the device 1300. For example, sensor component 1314 can detect the open/closed state of device 1300, the relative positioning of components, such as the display and keypad of device 1300. The sensor component 1314 can also detect the position change of the device 1300 or a component of the device 1300, the presence or absence of user contact with the device 1300, the orientation or acceleration/deceleration of the device 1300, and the temperature change of the device 1300. The sensor component 1314 can include a proximity sensor configured to detect the presence of nearby objects without any physical contact. The sensor component 1314 can also include a light sensor, such as a CMOS or CCD image sensor, for use in imaging applications. In some embodiments, the sensor component 1314 can also include an acceleration sensor, a gyroscope sensor, a magnetic sensor, a pressure sensor, or a temperature sensor.

The communication component 1316 is configured to facilitate wired or wireless communication between the device 1300 and other devices. The device 1300 can access a wireless network based on a communication standard, such as WiFi, 2G or 3G, or a combination thereof. In an example embodiment, the communication component 1316 receives a broadcast signal or broadcast related information from an external broadcast management system via a broadcast channel. In an example embodiment, the communication component 1316 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an example embodiment, the device 1300 can be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components for performing the above method.

In an example embodiment, a non-transitory computer-readable storage medium including instructions is also provided, such as a memory 1304 including instructions, and the above instructions can be executed by a processor 1320 of the device 1300 to complete the above method. For example, the non-transitory computer-readable storage medium can be a ROM, a random access memory (RAM), a CD-ROM, a tape, a floppy disk, an optical data storage device, etc.

Based on the same concept as the above method embodiment, the embodiment of the present disclosure also provides a device for sending configuration information, which may have the function of the network device 102 in the above method embodiment, and may be configured to execute the steps performed by the network device 102 provided in the above method embodiment. The function may be implemented by hardware, or by software or by hardware executing the corresponding software. The hardware or software includes one or more modules corresponding to the above functions.

In a possible implementation, the communication device 1400 shown in FIG. 14 may be used as the network device 102 involved in the above method embodiment, and execute the steps performed by the network device 102 in the above method embodiment. As shown in FIG. 14, the communication device 1400 may include a transceiver module 1401 and a processing module 1402 coupled to each other. The transceiver module 1401 may be configured to support the communication device 1400 to communicate, and the transceiver module 1401 may have a wireless communication function, for example, it can communicate wirelessly with other communication devices through a wireless air interface.

When executing the steps implemented by the network device 102, the transceiver module 1401 is configured to receive auxiliary information sent by the user equipment 101, and the auxiliary information includes service characteristic information of uplink service data. The processing module 1402 is configured to determine the time domain position for receiving uplink service data or perform preset resource configuration according to the service characteristic information.

In some possible implementations, the processing module 1402 is also configured to: in response to the user equipment sending uplink service data through CG-PUSCH, determine the starting position of the data frame of the uplink service data according to the service characteristic information; and monitor the CG-PUSCH from the starting position to the monitoring end position in the cycle corresponding to the data frame.

In some possible implementations, the processing module 1402 is also configured to: not monitor the CG-PUSCH between the monitoring end position in the cycle corresponding to the data frame and the starting position of the next data frame.

In some possible implementations, the monitoring end position is the end position of the last CG-PUSCH carrying uplink service data in the cycle corresponding to the data frame.

In some possible implementations, the processing module 1402 is also configured to: determine the monitoring end position by blind detection reception in the cycle corresponding to the data frame.

In some possible implementations, the processing module 1402 is also configured to: determine the monitoring end position according to the data size of the data frame, where the data size is a set value.

In some possible implementations, the transceiver module 1401 is further configured to: determine the monitoring end position of each service flow in the corresponding cycle of the data frame respectively in response to the uplink service data including multiple service flows.

In some possible implementations, the transceiver module 1401 is further configured to: send first configuration information to the user equipment, the first configuration information is configured to indicate one or more sets of CG-PUSCH resource configuration.

In some possible implementations, the processing module 1402 is further configured to: determine the resource configuration of C-DRX according to the service characteristic information; the transceiver module 1401 is further configured to: send second configuration information to the user equipment, the second configuration information is configured to indicate the resource configuration of C-DRX.

In some possible implementations, the processing module 1402 is further configured to: configure the starting time of the working period in the C-DRX according to the starting time offset of the service characteristic information, and configure the duration of the working period to include the generation period of the uplink service data.

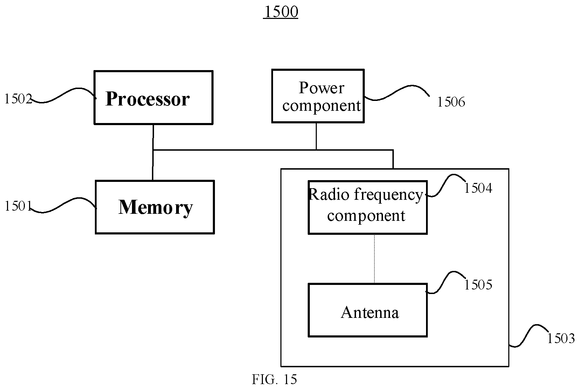

When the communication device is a network device 102, its structure can also be shown in FIG. 15. The structure of the communication device is described by taking a base station as an example. As shown in FIG. 15, the device 1500 includes a memory 1501, a processor 1502, a transceiver component 1503, and a power component 1506. The memory 1501 is coupled to the processor 1502, and can be configured to store the programs and data necessary for the communication device 1500 to implement various functions. The processor 1502 is configured to support the communication device 1500 to perform the corresponding functions in the above method, and the functions can be implemented by calling the program stored in the memory 1501. The transceiver component 1503 can be a wireless transceiver, which can be configured to support the communication device 1500 to receive signaling and/or data and send signaling and/or data through a wireless air interface. The transceiver component 1503 may also be referred to as a transceiver unit or a communication unit. The transceiver component 1503 may include a radio frequency component 1504 and one or more antennas 1505. The radio frequency component 1504 may be a remote radio unit (RRU), which may be used for transmission of radio frequency signals and conversion between radio frequency signals and baseband signals. The one or more antennas 1505 may be used for radiating and receiving radio frequency signals.

When the communication device 1500 needs to send data, the processor 1502 may perform baseband processing on the data to be sent, and then output the baseband signal to the radio frequency unit. The radio frequency unit performs radio frequency processing on the baseband signal and then sends the radio frequency signal through the antenna in the form of electromagnetic waves. When data is sent to the communication device 1500, the radio frequency unit receives the radio frequency signal through the antenna, converts the radio frequency signal into a baseband signal, and outputs the baseband signal to the processor 1502. The processor 1502 converts the baseband signal into data and processes the data.

After considering the specification and practicing the present disclosure herein, those skilled in the art will easily think of other implementation schemes of the embodiments of the present disclosure. The present disclosure is intended to cover any variation, use or adaptation of the embodiments of the present disclosure, which follows the general principles of the embodiments of the present disclosure and includes common knowledge or customary technical means in the technical field that are not disclosed in the present disclosure. The description and embodiments are to be regarded as exemplary only, and the true scope and spirit of the embodiments of the present disclosure are indicated by the following claims.

It should be understood that the embodiments of the present disclosure are not limited to the precise structure described above and shown in the drawings, and various modifications and changes can be made without departing from the scope thereof. The scope of the embodiments of the present disclosure is limited only by the appended claims.

### Industrial Applicability

In the method in the present disclosure, the user equipment reports the service characteristic information of the uplink service data to the network device, so that the network device can accurately know the service characteristic information of the uplink service data. Thus, the network device can perform more reasonable operations based on the service characteristic information of the uplink service data, such as receiving the uplink service data at an appropriate timing, or performing reasonable resource configuration, which is conducive to saving energy consumption of the network device or the user equipment.

## Claims

1. A method for sending auxiliary information, performed by a user equipment, comprising:
sending the auxiliary information to a network device, wherein the auxiliary information comprises service characteristic information of uplink service data.

2. The method according to claim 1, wherein,
the uplink service data comprises at least one service flow;
the auxiliary information comprises the service characteristic information corresponding to the at least one service flow.

3. The method according to claim 1 or 2, wherein the service characteristic information comprises at least one of:
a frame rate of a service flow;
a service cycle of a service flow;
a start time offset of a service flow;
delay jitter information of a service flow; and
a data size of a data frame in a service flow.

4. The method according to claim 1, wherein sending the auxiliary information to the network device comprises:
in response to receiving request information sent by the network device, sending the auxiliary information to the network device, wherein the request information is configured to instruct the user equipment to report the service characteristic information.

5. A method for receiving auxiliary information, performed by a network device, comprising:
receiving auxiliary information sent by a user equipment, wherein the auxiliary information comprises service characteristic information of uplink service data; and
determining a time domain position for receiving the uplink service data or to perform preset resource configuration according to the service characteristic information.

6. The method according to claim 5, wherein determining the time domain position for receiving the uplink service data according to the service characteristic information comprises:
in response to the user equipment sending the uplink service data via CG-PUSCH, determining a starting position of a data frame of the uplink service data according to the service characteristic information; and
monitoring the CG-PUSCH from the starting position to a monitoring end position within a cycle corresponding to the data frame.

7. The method according to claim 6, wherein the method further comprises:
not monitoring the CG-PUSCH between the monitoring end position within the cycle corresponding to the data frame and a starting position of a next data frame.

8. The method according to claim 6 or 7, wherein
the monitoring end position is an end position of a last CG-PUSCH carrying the uplink service data in the cycle corresponding to the data frame.

9. The method according to claim 8, wherein the method further comprises:
determining the monitoring end position by blind detection reception in the cycle corresponding to the data frame.

10. The method according to claim 6 or 7, wherein the method further comprises:
determining the monitoring end position according to a data size of the data frame, wherein the data size is a set value.

11. The method according to claim 6 or 7, wherein the method further comprises:
in response to the uplink service data comprising multiple service flows, determining the starting position and the monitoring end position of each service flow in the cycle corresponding to the data frame respectively according to the service characteristic information corresponding to each service flow.

12. The method according to claim 5, wherein the method further comprises:
sending first configuration information to the user equipment, wherein the first configuration information is configured to indicate one or more sets of CG-PUSCH resource configurations.

13. The method according to claim 5, wherein determining to perform the preset resource configuration according to the service characteristic information comprises:
determining a resource configuration of C-DRX according to the service characteristic information; and
sending second configuration information to the user equipment, wherein the second configuration information is configured to indicate the resource configuration of C-DRX.

14. The method according to claim 13, wherein,
determining the resource configuration of C-DRX according to the service characteristic information comprises:
configuring starting time of a working period in the C-DRX according to a starting time offset of the service characteristic information, and configuring a duration of the working period to comprise a generation period of the uplink service data.

15. A device for sending auxiliary information, configured in a user equipment, comprising:
a transceiver module, configured to send auxiliary information to a network device, wherein the auxiliary information comprises service characteristic information of uplink service data.

16. A device for receiving auxiliary information, configured in a network device, comprising:
a transceiver module, configured to receive auxiliary information sent by a user equipment, wherein the auxiliary information comprises service characteristic information of uplink service data; and
a processing module, configured to determine a time domain position of receiving the uplink service data or to perform preset resource configuration according to the service characteristic information.

17. A communication device, comprising a processor and a memory, wherein
the memory is configured to store a computer program; and
the processor is configured to execute the computer program to implement the method according to any one of claims 1 to 4.

18. A communication device, comprising a processor and a memory, wherein
the memory is configured to store a computer program;
the processor is configured to execute the computer program to implement the method according to any one of claims 5 to 14.

19. A computer-readable storage medium, wherein the computer-readable storage medium stores instructions, and when the instructions are called and executed on a computer, the computer executes the method according to any one of claims 1 to 4.

20. A computer-readable storage medium, wherein the computer-readable storage medium stores instructions, and when the instructions are called and executed on a computer, the computer executes the method according to any one of claims 5 to 14.
